(19) Europäisches Patentamt / European Patent Office / Office européen des brevets

(11) **EP 2 924 620 B1**

(12) **EUROPEAN PATENT SPECIFICATION**

(45) Date of publication and mention
of the grant of the patent:
**30.10.2019 Bulletin 2019/44**

(51) Int Cl.:
*G06Q 10/06* *(2012.01)*     *G06Q 50/10* *(2012.01)*
*G06Q 30/02* *(2012.01)*

(21) Application number: **14305446.8**

(22) Date of filing: **27.03.2014**

(54) **Method and system for high-performance private matching**

Verfahren und System für hochleistungsfähigen privaten Abgleich

Procédé et système de mise en correspondance privée haute performance

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.09.2015 Bulletin 2015/40**

(73) Proprietor: **Alcatel Lucent
91620 Nozay (FR)**

(72) Inventors:
• **Chen, Ruichuan
70435 Stuttgart (DE)**

• **Ding, Cong
70435 Stuttgart (DE)**
• **Hilt, Volker
70435 Stuttgart (DE)**

(74) Representative: **MERH-IP Matias Erny Reichl
Hoffmann
Patentanwälte PartG mbB
Paul-Heyse-Strasse 29
80336 München (DE)**

(56) References cited:
**WO-A1-2013/097886     US-A1- 2007 223 690
US-A1- 2012 311 035**

EP 2 924 620 B1

**Description**

The present document relates to a method and a system for providing matching, e.g. matching between different people having the same or similar attributes.

Matching services have been widely deployed, for instance, to help users find nearby users in location-based systems, or to help users find like-minded people in online social networks. User privacy, however, has become a major concern in that the existing matching services reveal users' sensitive information to the service providers. Solutions have been proposed to provide protection of user privacy, but these solutions scale poorly or cannot properly protect user privacy during the matching.

US 2012/311035 A1 describes technologies pertaining to protecting user privacy in connection with attribute-based matching services.

WO 2013/097886 A1 describes a users' data profiling network implementing a method of dynamic pseudonymization of users for ensuring the privacy of the users.

The present document addresses the technical problem of providing a method and a corresponding system which allow for an efficient and scalable matching that protects the privacy of users. In this context, a method and a corresponding system for performing private matching are described. The described method and/or system may be referred to herein as Primat. Primat scales well in terms of computational, bandwidth and storage overheads, while operating under a pre-determined trust model. Primat may achieve such performance notably by employing an efficient exclusive-or operation as its crypto primitive, and by maintaining user data across at least three different servers.

According to an aspect a matching system for matching a plurality of clients is described. A client may comprise a software application which is executed on a computing device. A client may be associated with a particular user. Each client is identified by an identifier (referred to herein as CID) and is associated with one or more attributes (referred to herein as ATT). An identifier may e.g. comprise a user name of a user of the client. The one or more attributes may e.g. comprise one or more attributes or characteristics of the user of the client.

The matching system comprises an identity anonymizer (referred to herein as AnoC) configured to store identity mappings between identifiers (i.e. CIDs) of clients and corresponding pseudo identifiers (referred to herein as pCID). The identity anonymizer may be implemented on a computing device, e.g. on a server. The identity mappings may be stored on a storage device of the identity anonymizer.

The matching system further comprises an attribute anonymizer (referred to herein as AnoA) configured to store attribute mappings between attributes (i.e. ATTs) and corresponding pseudo attributes (referred to herein as pATT). The attribute anonymizer may be implemented on a computing device, e.g. on a server. The attribute mappings may be stored on a storage device of the attribute anonymizer.

Furthermore, the matching system comprises a matcher (referred to herein as Mat) configured to store pseudo mappings between pseudo identifiers (i.e. pCIDs) and associated one or more pseudo attributes (i.e. pATT). The matcher may be implemented on a computing device, e.g. on a server. The pseudo mappings may be stored on a storage device of the matcher.

The provision of the above mentioned at least three entities, i.e. the identity anonymizer, the attribute anonymizer and the matcher, allow for an efficient and scalable matching that protects the privacy of users (i.e. clients). In particular, the identity anonymizer, the attribute anonymizer and the matcher may be separate entities and/or computing devices, thereby ensuring knowledge, regarding the mapping between the identity (CID) of a client and the one or more attributes (ATT) which are associated with the client, are known to none of the three entities.

Even more particularly, the identity anonymizer, the attribute anonymizer and the matcher may be configured to be operated and/or to exchange information such that neither the identity anonymizer, nor the attribute anonymizer and nor the matcher are enabled to generate a mapping between the identifier (i.e. CIDs) and the one or more attributes (i.e. ATTs) of a client. The identity anonymizer, the attribute anonymizer and the matcher may be configured to be honest but curious. This means that the identity anonymizer, the attribute anonymizer and the matcher may run a specified protocol faithfully (i.e. the servers are honest), but may try to exploit additional information that can be learned in doing so. The identity anonymizer, the attribute anonymizer and the matcher are configured to prevent collusion among the three entities, i.e., at least two of the three entities refuse to collude. While each entity may follow the specified protocol, an entity may operate fake clients to try to violate the privacy of legitimate clients.

The identity anonymizer does not receive the one or more associated attributes (ATT) of the first client. Furthermore, the attribute anonymizer does not receive the identifier (CID) of the first client. In other words, the first client sends the one or more associated attributes (ATT) of the first client only to the attribute anonymizer, and the identifier (CID) of the first client only to the identity anonymizer. As a result of this, neither the attribute anonymizer nor the identity anonymizer can build the mapping between the identifier (i.e. CIDs) and the one or more attributes (i.e. ATTs) of the first client.

The matcher is configured to generate a pseudo mapping between the pseudo identifier (pCID) and the one or more pseudo attributes (pATT) of the first client. The pseudo identifier (pCID) is received from the identity anonymizer, and the one or more pseudo attributes (pATT) are received from the attribute anonymizer. In order to enable the matcher to build the pseudo mapping, the identity anonymizer and the attributed anonymizer are configured to receive a registration identifier (REG) along with the identifier (CID) and the one or more associated attributes (ATT) of the first client, respectively. The registration identifier (REG) may comprise a (e.g. pseudo) random number, which may have been generated by the first client. The registration identifier (REG) is forwarded to the matcher along with the pseudo identifier (pCID) and the one or more pseudo attributes (pATT). As such, the matcher is configured to generate the pseudo mapping between the pseudo identifier (pCID) and the one or more pseudo attributes (pATT) of the first client using the registration identifier (REG).

The objective of preventing the identity anonymizer, the attribute anonymizer and/or the matcher to generate a mapping between the identifier (i.e. CIDs) and the one or more attributes (i.e. ATTs) of a client may be achieved by using XOR-based encryption for exchanging information between the entities of the matching system, i.e. between the identity anonymizer, the attribute anonymizer and the matcher. XOR-based encryption may be achieved by generating so called split messages for sending information from a client to one of the entities (or vice versa). The split messages may be sent via the remaining other two entities of the matching system, which are acting as proxies. By using XOR-based encrypted split messages, the proxies cannot extract the information which is sent from the client to the one of the entities (or vice versa). As a result of this, it can be ensured that none of the entities, i.e. none of the identity anonymizer, the attribute anonymizer and the matcher, can build up the mapping between the identifier (i.e. CIDs) and the one or more attributes (i.e. ATTs) of a client.

As such, the matching system may be configured to generate an identity mapping, one or more attribute mappings and a pseudo mapping for a first client. The generation of such mappings is typically performed in the context of a client registration process or protocol which is described in detail within the present document. The client registration process may be such that none of the entities of the matching system can build up the mapping between the identifier (i.e. CIDs) and the one or more attributes (i.e. ATTs) of the first client.

For this purpose, the identity anonymizer may be configured to determine a pseudo identifier (i.e. pCID) for the first client, and the attribute anonymizer may be configured to determine one or more pseudo attributes (i.e. pATT) for the one or more attributes (i.e. ATT) that the first client is associated with. The attribute anonymizer may be configured to store a single attribute mapping for an attribute (ATT). As such, if a plurality of clients has a common attribute, the same attribute mapping may be used for this common attribute. In other words, the common attribute may be assigned to the same pseudo attribute. If the pseudo attribute (i.e. pATT) for an attribute does not yet exist, the attribute anonymizer may be configured to generate a (e.g. pseudo) random pseudo attribute (pATT) for the attribute (ATT). The pseudo attributes are typically generated such that there is a one-to-one correspondence between pATT and ATT.

In a similar manner, the identity anonymizer may be configured to store a single identity mapping for an identifier (CID). The identity anonymizer may be configured to generate a (e.g. pseudo) random pseudo identifier (pCID) for an identifier (CID), notably if the pseudo identifier for the client does not yet exist. The pseudo identifiers are typically generated such that there is a one-to-one correspondence between pCID and CID.

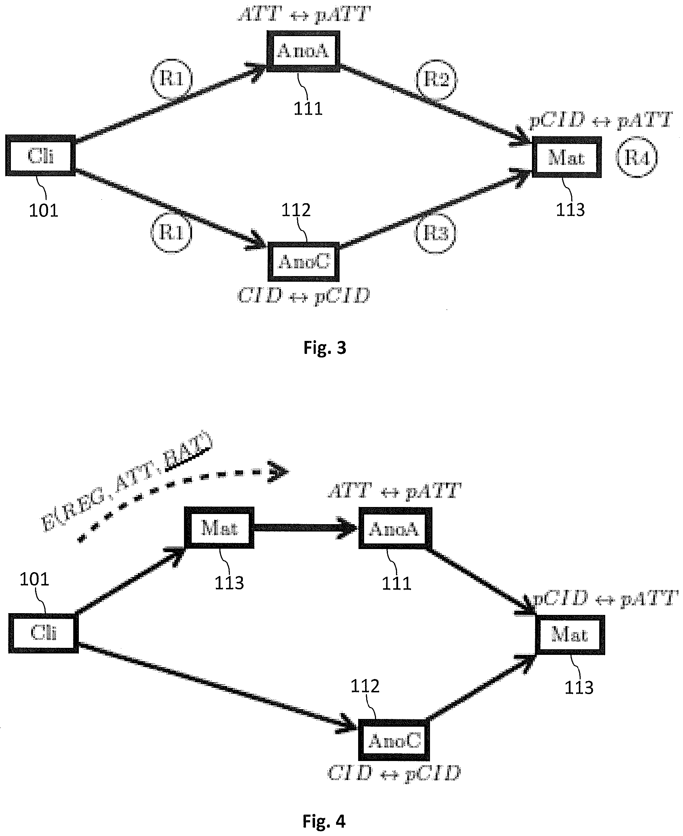

The matcher may be configured to act as a proxy between the first client and the attribute anonymizer. Furthermore, the attribute anonymizer may be configured to receive each attribute (ATT) associated with the first client via the matcher using a separate cryptographic protocol session (e.g. using Transport Layer Security, TLS). By doing this, it may be ensured that the one or more attributes of the first client can be transferred to the attribute anonymizer anonymously and unlinkably. Details regarding this aspect are described in the context of Fig. 4.

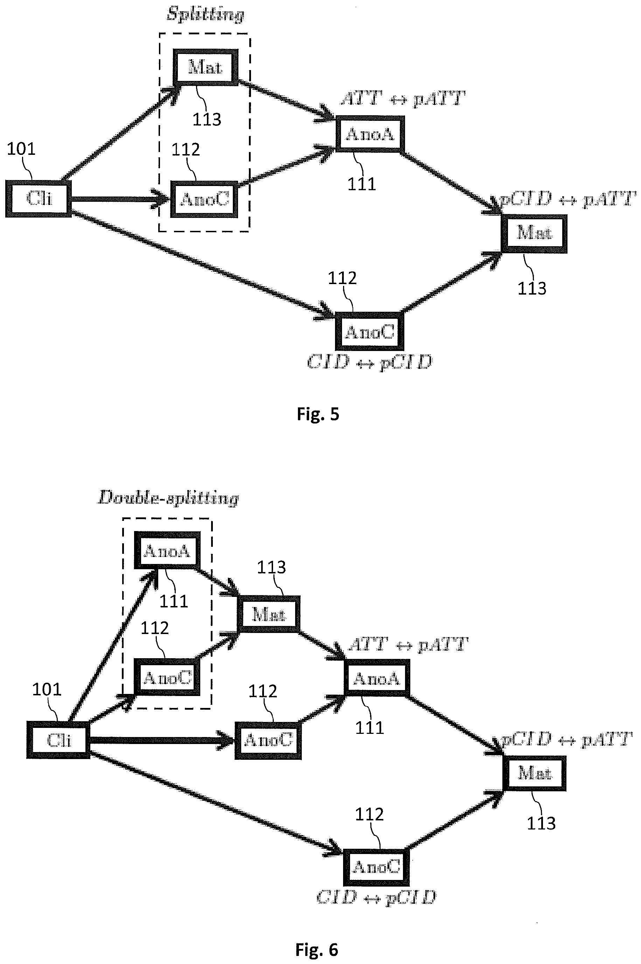

As indicated above, the matching system may make use of XOR-based encryption and/or split messaging for sending information from a client to one of the entities of the matching system. In particular, the matcher and the identifier anonymizer may be configured to act as separate proxies between the first client and the attribute anonymizer. In particular, the attribute anonymizer may be configured to receive the one or more attributes (ATT) associated with the first client using a first split message sent via the matcher and a second split message sent via the identifier anonymizer. The first and second split messages may be generated based on the one or more attributes (ATT) using XOR-based encryption. By doing this, it may be ensured that the one or more attributes of the first client can be transferred to the attribute anonymizer anonymously and unlinkably, without the need of building separate cryptographic protocol sessions for each attribute. Details regarding this aspect are described in the context of Fig. 5.

The attribute anonymizer and the identifier anonymizer may be further configured to act as separate proxies between the first client and the matcher. The matcher may be configured to receive the first split message using a third split message sent via the attribute anonymizer and a fourth split message sent via the identifier anonymizer. The third and fourth split messages may be generated based on the first split message using XOR-based encryption. By doing this, it may be ensured that the matcher (acting as proxy) is prevented from building up knowledge regarding the mapping between the CID and the one or more ATTs of the first client. Details regarding this aspect are described in the context of Fig. 6.

The identity anonymizer, the attribute anonymizer and the matcher may be configured to receive a batch identifier from the first client. The batch identifier (BAT) may be indicative of the currentness of the one or more attributes associated with the first client. As such, it may be ensured that the one or more attributes of the first client may be updated in an efficient manner.

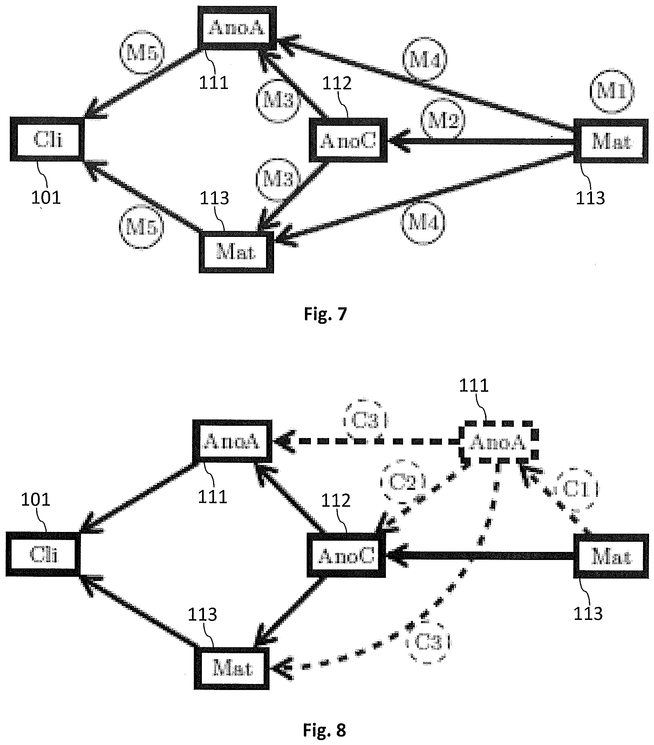

In a similar manner to the client registration process, the matching system may be configured to provide query results to a query of a query client using a query mapping procedure or process. Details regarding this aspect are described in the context of Figs. 7 and 8. The matching system may make use of the client registration process, in order to transfer a query from a query client to the matcher. As such, it may be ensured that none of the entities of the matching system can build up a mapping between a query identifier (referred to herein as $\text{CID}_q$) of the query client and one or more query attributes (referred to herein as $\{\text{ATT}_i\}_{i=1}^{n}$ ) which form the query. In other words, by doing this, privacy of a query may be ensured.

In particular, the identity anonymizer may be configured to receive a query identifier ($\text{CID}_q$) from a query client and to translate the query identifier ($\text{CID}_q$) into a corresponding query pseudo identifier ($\text{pCID}_q$), using a pre-determined identifier mapping. Furthermore, the attribute anonymizer may be configured to receive one or more query attributes $(\{\text{ATT}_i\}_{i=1}^{n})$ from the query client and to translate the one or more query attributes $(\{\text{ATT}_i\}_{i=1}^{n})$ into corresponding one or more pseudo query attributes $(\{\text{pATT}_i\}_{i=1}^{n})$, using one or more pre-determined attribute mappings. For transferring the query identifier ($\text{CID}_q$) to the identity anonymizer and/or for transferring the one or more query attributes $(\{\text{ATT}_i\}_{i=1}^{n})$ to the attribute anonymizer, the above mentioned client registration process may be used.

The matcher may be configured to identify one or more matching pseudo identifiers $(\{\text{pCID}_j\}_{j=1}^{k})$ based on the one or more pseudo query attributes $(\{\text{pATT}_i\}_{i=1}^{n})$ and based on the pseudo mappings. For this purpose, various different matching algorithms may be used. The one or more matching pseudo identifiers $(\{\text{pCID}_j\}_{j=1}^{k})$ may be retranslated into one or more corresponding matching identifiers $(\{\text{CID}_j\}_{j=1}^{k})$, using the identity anonymizer. The one or more corresponding matching identifiers $(\{\text{CID}_j\}_{j=1}^{k})$ may be provided as query result to the query client. The retranslation and the provision of the one or more corresponding matching identifiers $(\{\text{CID}_j\}_{j=1}^{k})$ to the query client may be performed such that none of the entities of the matching system may build a mapping between any one of the one or more matching identifiers $(\{\text{CID}_j\}_{j=1}^{k})$ and the one or more query attributes $(\{\text{ATT}_i\}_{i=1}^{n})$.

For this purpose, the matcher may be configured to transmit each of the one or more matching pseudo identifiers $(\{\text{pCID}_j\}_{j=1}^{k})$ to the identity anonymizer within separate one or more messages. Each of the one or more messages may be associated with a different response parameter $\{r_j\}_{j=1}^{k}$. The different response parameters may be (e.g. pseudo) random numbers.

In addition, the matcher may be configured to provide the query pseudo identifier ($\text{pCID}_q$) to the identity anonymizer using a query parameter $r_q$. In addition, the matcher may be configured to provide one or more mappings between the one or more response parameters $\{r_j\}_{j=1}^{k}$ and the query parameter $r_q$ to the identity anonymizer using e.g. the attribute anonymizer as proxy. The identity anonymizer may make use of the one or more response parameters $\{r_j\}_{j=1}^{k}$ and the query parameter $r_q$ to generate a link between the original query and the one or more matching pseudo identifiers $(\{\text{pCID}_j\}_{j=1}^{k})$. In particular, the identity anonymizer may be configured to determine the one or more matching identifiers $(\{\text{CID}_j\}_{j=1}^{k})$ from the one or more matching pseudo identifiers $(\{\text{pCID}_j\}_{j=1}^{k})$ using the identity

mappings and/or the one or more mappings between the one or more response parameters $\{r_j\}_{j=1}^{k}$ and the query parameter $r_q$. The one or more matching identifiers $\left(\{CID_j\}_{j=1}^{k}\right)$ may be provided as a query result to the query client.

The identity anonymizer may be configured to transmit the one or more matching identifiers $\left(\{CID_j\}_{j=1}^{k}\right)$ to the query client via the matcher and the attribute anonymizer acting as proxies. The one or more matching identifiers $\left(\{CID_j\}_{j=1}^{k}\right)$ may be transmitted as split messages which have been generated using XOR-based encryption. By doing this, it may be ensured that the identity anonymizer can handle the one or more matching identifiers $\left(\{CID_j\}_{j=1}^{k}\right)$ in an anonymous and unlinkable manner.

According to a further aspect a method for providing matching in an efficient and privacy protecting manner is described. The method comprises corresponding features to the matching system described in the present document. In particular, the method may comprise determining a pseudo identifier (pCID) for a first client, using an identity anonymizer. The method may further comprise determining one or more pseudo attributes (pATT) for the one or more attributes (ATT) that the first client is associated with, using an attribute anonymizer. In addition, the method may comprise generating a pseudo mapping between the pseudo identifier (pCID) and the one or more pseudo attributes (pATT) of the first client, using a matcher.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used standalone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 shows a block diagram of an example matching system;
Fig. 2 illustrates the principles of XOR-based encryption for an example where Alice sends a message $M$ of length $l$ bits to Bob via two proxies;
Fig. 3 illustrates a strawman design for an example client registration process;
Fig. 4 illustrates an example TLS-based client registration process. In Fig. 4 $E(M)$ denotes a TLS-encrypted message $M$ from client to AnoA via Mat;
Fig. 5 illustrates an example splitting-based client registration process;
Fig. 6 illustrates an example client registration process design based on double-splitting;
Fig. 7 illustrates a strawman design for an example query matching process; and
Fig. 8 illustrates a further design for a query matching process.

Matching services have been widely deployed in various online applications to help users find other users with specified attributes. For instance, location-based applications, like WeChat, allow users to find nearby users. Online social networks, like Facebook, allow users to search for other users who match some given predicates. A common practice to enable matching services is for service providers to maintain the complete information of all users to support user queries. Privacy, however, has become a serious concern, because this practice reveals users' sensitive information to the service providers, which may misuse such information or even sell the sensitive information.

Two approaches to protecting user privacy in matching services are anonymization and obfuscation. The former suppresses or anonymizes users' personally identifiable information, while the latter adds noise to user data in an attempt to make service providers unable to learn users' accurate information. However, it may be shown that anonymization does not work well, and anonymized user data can normally be de-anonymized. Regarding obfuscation, it may be shown that, to achieve a reasonable level of privacy, the amount of obfuscation needed is surprisingly high, thus significantly degrading the quality of matching service.

Alternatively, a cryptographic protocol like private information retrieval (PIR) allows a user to retrieve other users with specified attributes from a database without revealing which users are retrieved. PIR, however, does not treat the database itself as private. The database operator needs to know all users' attributes, which makes PIR not suitable for protecting the privacy of the users' information. Secure multi-party computation (SMC), in theory, may also be used to emulate a matching system while providing relatively strong privacy guarantees. SMC, however, is expensive in terms of computation and bandwidth, making it unsuitable for large-scale deployment.

In view of the above, it is desirable to provide scalable and computationally efficient methods and/or systems for private matching which reliably protect information (i.e. attributes) of individual users.

In this document a high-performance private matching system, referred to as Primat, is described. The system helps users find other users with specified attributes in a privacy-preserving fashion. Primat provides a high degree of scalability, and mitigates the attack where a single server could operate a handful of clients to easily violate all users' privacy. Primat may operate under a trust model which makes use of honest-but-curious servers that do not collude.

Primat maintains user data across three separate servers in such a way that each server knows only partial information of users and no individual server can recreate the original user data. Primat uses the efficient exclusive-or (XOR) operation as its crypto primitive, rather than relatively expensive public-key operations. In so doing, Primat achieves high performance.

To prevent a server from operating clients to arbitrarily learn legitimate users' information, two of the three Primat servers directly interact with users. In other words, there are two user-facing servers. Each such server individually limits a user to some fixed rate of queries, such that the clients operated by one user-facing server cannot bypass the rate-limiting enforced by the other user-facing server, unless the two servers collude or use a botnet. This substantially raises the bar for the adversary.

As such, the present document describes a high-performance private matching system, referred to as Primat. The described system exhibits relatively low computational complexity, relatively high bandwidth and relatively low storage requirements. Primat mitigates the attack where a server operates clients to violate user privacy.

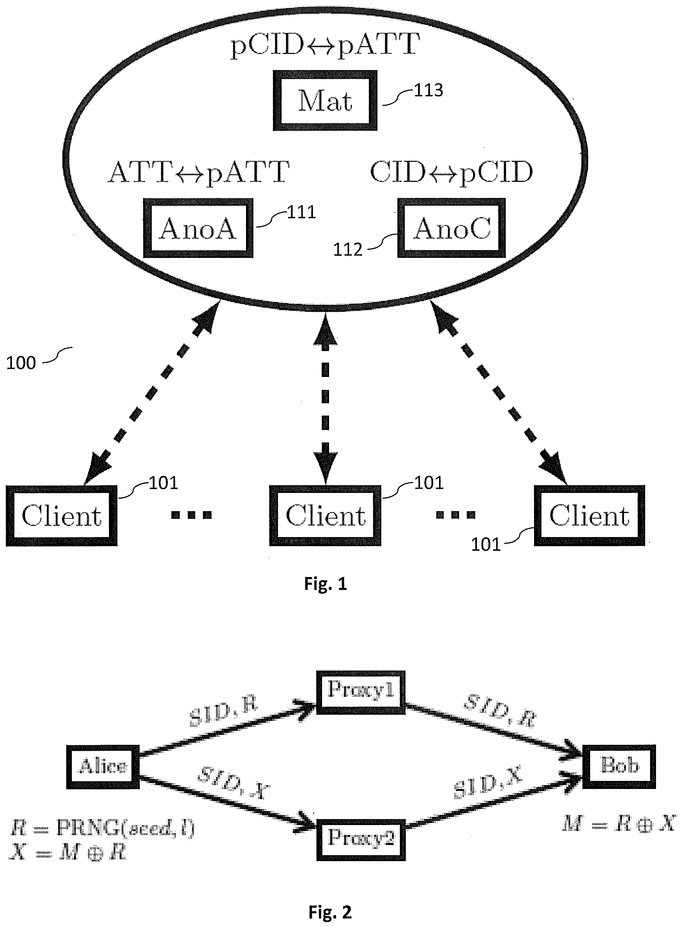

In the following a system overview is provided in the context of Fig. 1. In particular, Fig. 1 provides a high-level overview of the Primat system 100, which comprises two types of system components: clients 101 and servers 111, 112, 113. The clients 101 comprise user devices under the users' control. Users typically have exclusive control over their own data on the client devices 101. Clients 101 typically store user attributes, register and update attributes to the servers 111, 112, 113, and query the servers 111, 112, 113 to find other clients matching some specified attributes. Client software on the clients 101 can be bundled with existing software that requires the private matching service, thus eliminating need for user incentives.

The Primat system 100 comprises at least three servers 111, 112, 113. The servers 111, 112, 113 work together to provide the matching service in such a way that pre-determined privacy goals are provided. In order to enable the matching service, the servers 111, 112, 113 typically need to know the mapping between each client identifier (CID) and its associated attributes (ATT's). A possible approach is to maintain such mapping on a single server. This approach, however, violates user privacy. This is simply because the single server directly sees each client's attributes. To solve this problem, it is proposed to divide the sensitive "CID↔ATT" mapping into three pieces of information, each piece maintained by one individual server 111, 112, 113.

More specifically, as shown in Fig. 1, it is proposed to associate a randomly generated pseudo client identifier (pCID) with each client identifier (CID), and a randomly generated pseudo attribute (pATT) with each attribute (ATT). The Primat system 100 then lets one server 112 maintain the "CID↔pCID" mapping (this server 112 may be referred to the ID anonymizing server or client identifier anonymizer (AnoC), the mapping may be referred to as identity mapping), and lets another server 111 maintain the "ATT↔pATT" mapping (this server 111 may be referred to as the attribute anonymizing server or attribute anonymizer (AnoA), the mapping may be referred to as attribute mapping).

To build the association between clients and attributes in a privacy-preserving way, the Primat system 100 lets the third server 113, called a matcher (Mat) or matching server, maintain the "pCID↔pATT" mapping (referred to herein as pseudo mapping). With this setting, each of the three servers 111, 112, 113 in the Primat system 100 knows only one piece of the sensitive "CID↔ATT" mapping, and no single server can recreate the original "CID↔ATT" mapping. Instead, this mapping can only be recreated by the three servers 111, 112, 113 collaboratively.

**Table 1(a)**

| Client Identifier (CID) | Attribute (ATT) | Pseudo Client Identifier (pCID) | Pseudo Attribute (pATT) |
| --- | --- | --- | --- |
| Alice | Hiking<br>Swimming | X | A<br>B |

(continued)

| Client Identifier (CID) | Attribute (ATT) | Pseudo Client Identifier (pCID) | Pseudo Attribute (pATT) |
|---|---|---|---|
| Bob | Hiking<br>Mountaineering | Y | A<br>C |
| Carol | Swimming<br>Surfing | Z | B<br>D |

**Table 1(b)**

| CID | pCID |
|---|---|
| Alice | X |
| Bob | Y |
| Carol | Z |

**Table 1(c)**

| ATT | pATT |
|---|---|
| Hiking | A |
| Swimming | B |
| Mountaineering | C |
| Surfing | D |

**Table 1(d)**

| pCID | pATT |
|---|---|
| X | A |
| X | B |
| Y | A |
| Y | C |
| Z | B |
| Z | D |

Table 1 gives a concrete example to better demonstrate the respective information maintained by each Primat server 111, 112, 113. It is supposed that each user has some sport attributes, as shown in Table 1(a). To enable the private matching service, the Primat system 100 breaks up the original information into three pieces of information: the "CID↔pCID" mapping (Table 1(b)), the "ATT↔pATT" mapping (Table 1(c)), and the "pCID↔pATT" mapping (Table 1(d)). Each of the pieces of information is maintained by one individual server 111, 112, 113. In addition, the three servers may act as proxies for each other, thereby providing clients with anonymity and unlinkability. This is described in further details below.

In the present document, clients 101 may be assumed to be potentially malicious. The clients 101 might falsify user attributes to pollute the matching results learned by other clients. Each attribute itself may be assumed to be not sensitive; rather, the association between a client and its attributes may be sensitive. The three servers 111, 112, 113 may be assumed to be honest but curious. The servers 111, 112, 113 run the specified protocol faithfully, but may try to exploit additional information that can be learned in doing so. There is typically no collusion among the three servers, i.e., at least two of the three servers refuse to collude. While each server follows the specified protocol, it may operate fake clients to try to violate the privacy of legitimate clients.

The honest-but-curious trust assumption is typically weaker than a more general trust model where all servers could be arbitrarily malicious. The honest-but-curious trust assumption is, however, believed to be reasonable in the real world. By way of example, a scenario may be envisioned whereby server operators explicitly state non-collusion in their privacy policies, making the server operators legally liable.

The Primat system 100 may be configured to achieve at least two privacy goals: anonymity and un-linkability. Anonymity ensures that no system component can associate client data with a client identifier. Unlinkability ensures that no system component is in a position to link any pair of attributes or matched results to the same client even in the absence of a client identifier (i.e., anonymously). Breaking unlinkability could allow system components to build quasi-identifiers for clients, which may be further de-anonymized using auxiliary information.

The Primat system 100 typically scales well to support a large population with millions of clients. The client population consists of various types of user devices including mobile and low-capacity devices; therefore, clients 101 may have only limited resources. The Primat system 100 may be configured to tolerate these situations. Even an honest-but-curious server may operate fake clients in an attempt to learn legitimate clients' private information. The Primat system 100 may be configured to be resistant to such servers, and minimize the risks incurred.

In the following, the XOR-based encryption used within the Primat system 100 is described. The described XOR-based encryption allows for low computational complexity and a high degree of scalability.

XOR-based encryption (i.e., one-time pad) may be used to replace relatively expensive public-key operations in various privacy-preserving settings. In the following the XOR-based encryption and its notation is described in the context of an example shown in Fig. 2. As shown in Fig. 2, when Alice wants to transmit a message $M$ of length $l$ bits to Bob, Alice splits the message $M$ into two split messages, $R$ and $X$, of the same length. Specifically, the first split message $R$ is generated using a pseudo random number generator (PRNG) with a secure random seed, and the second split message $X$ is generated by performing an XOR operation on $M$ and $R$.

$$R = \mathrm{PRNG}(seed, l)$$
$$X = M \oplus R \tag{1}$$

Furthermore, Alice generates a unique split identifier (SID) for each pair of split messages $\langle R, X \rangle$. The SID is itself a large random number. It ensures that the two split messages are uniquely paired with high probability during the time the message is being proceed in the system. Alice then transmits the two split messages (with the split identifier) to two proxies, respectively, as shown in Figure 2. Afterwards, the proxies forward the received split messages to Bob.

$$\mathrm{Alice} \to \mathrm{Proxy\,1} \to \mathrm{Bob}: SID, R$$
$$\mathrm{Alice} \to \mathrm{Proxy\,2} \to \mathrm{Bob}: SID, X \tag{2}$$

Once receiving a pair of split messages $\langle R, X \rangle$ with the same split identifier, Bob joins them to recreate the original message $M$ by XOR'ing $R$ and $X$.

$$M = R \oplus X \tag{3}$$

With the XOR-based encryption, Alice can anonymously transmit a message $M$ to Bob using two proxies. Neither proxy could know the actual message unless the proxies collude. To prevent an eavesdropper from decrypting messages, all direct communications may be encrypted with the standard transport layer security (TLS).

It should be noted that while expression (2) fully notates the message transmission process, for simplicity the following notation is used may be used in the present document:

$$\mathrm{Alice} \xrightarrow{\mathrm{Proxy1}} \mathrm{Bob}: \underline{M}$$
$$\mathrm{Alice} \xrightarrow{\mathrm{Proxy2}} \mathrm{Bob}: \underline{M} \tag{4}$$

Or equivalently:

$$\mathrm{Alice} \xrightarrow[\mathrm{Proxy2}]{\mathrm{Proxy1}} \mathrm{Bob}: \underline{M} \tag{5}$$

Here, the underlined $M$ denotes the split of message $M$, either $R$ or $X$. The split identifier SID is omitted for clarity. Therefore, expression (4) or (5) means "Alice transmits a pair of split messages of *M* to Bob via Proxy1 and Proxy2".

After having described the XOR-based encryption, the system design of the Primat system 100 is described in the following. The design comprises at least two protocols: client registration and query matching. The Primat system 100 typically uses long-lived TLS connections to protect all direct communications from eavesdroppers.

In order to enable a matching service, each client (Cli) 101 needs to register its attributes to the Primat system 100. Fig. 3 illustrates this client registration process. As described in the system overview, there are three servers 111, 112, 113 in the system: a client identifier anonymizer (AnoC) 112, an attribute anonymizer (AnoA) 111, and a matcher (Mat) 113. To preserve user privacy, each server 111, 112, 113 typically maintains only one piece of the complete sensitive information, i.e., of the mapping between each client identifier and its associated attributes.

For descriptive clarity, the client registration protocol or process is described using a strawman design, which lacks some privacy properties. The strawman design is revised in the following in order to complete the design. The example client registration protocol comprises four steps.

Step R1 of the client registration process relates to attribute transmission. Each client 101 generates and stores its own attributes locally on the client 101. In some cases, the attributes themselves are sensitive. Here, to reduce the sensitivity, a client 101 can map its sensitive attributes to approximated coarse-grained attributes. For instance, suppose some users are working on the Manhattan island, these users could set their work location attribute to "New York City" rather than "Manhattan". This approximation may be done depending on the application domain. In the following it is assumed that each attribute itself is not sensitive; instead, the mapping between a client identifier and its associated attributes is considered to be sensitive, and therefore needs to be protected.

To register some or all of a client's attributes, the client 101 sends the attribute (ATT) to the attribute anonymizer (AnoA) 111, and its client identifier (CID) to the client identifier anonymizer (AnoC) 112. The client 101 further generates a (relatively large) random number as the registration identifier (REG) to help the matcher (Mat) 113 to later anonymously associate the client 101 with its attribute.

Furthermore, it may occur that the attributes of a client 101 are constantly changing. A client 101 may register a batch of attributes first, and then update its attributes later. Therefore, the client may also attach a batch identifier (BAT) to its registering attributes. The same batch of attributes typically has the same batch identifier. Any more current (e.g. larger) batch identifier from the same client 101 will outdate this client's previous batches with smaller identifiers.

Altogether, for each attribute in a batch, the client 101 sends the following messages to the two anonymizers 111, 112, respectively:

$$\text{Cli} \rightarrow \text{AnoA} : REG, ATT, \underline{BAT}$$
$$\text{Cli} \rightarrow \text{AnoC} : REG, CID, \underline{BAT} \quad (6)$$

Here, the batch identifier may be sent in a split form. This is to prevent the two anonymizers from knowing the batch identifier of a client's registered attributes, which could later be used to break the required unlinkability property.

It should be noted that the attribute anonymizer AnoA 111 interacts directly with a client 101 (see Fig. 3), and therefore AnoA 111 may at this point associate multiple attributes with the client 101. This would be a violation of the above mentioned privacy goals. In order to address this issue, the design of the client registration process is at a later stage within this document.

Step R2 of the client registration process relates to attribute anonymization. Once receiving an attribute ATT, the attribute anonymizer 111 assigns a randomly generated pseudo attribute pATT to the received ATT. If the ATT has been processed before, the previously assigned pATT may be reused without assigning a new pseudonym to the same ATT.

The attribute anonymizer AnoA 111 maintains the mapping between ATT and pATT in a local database, and then forwards the pseudo attribute pATT, as well as the received registration identifier REG and the split batch identifier BAT, to the matcher 113.

$$\text{AnoA} \rightarrow \text{Mat} : REG, pATT, \underline{BAT} \quad (7)$$

Step R3 of the client registration process relates to client identifier anonymization. Similar to the attribute anonymization step, the client identifier also needs to be anonymized. Once receiving a client identifier CID in Step R1, the client identifier anonymizer 112 assigns a randomly generated pseudo client identifier pCID to the received CID. The same pCID is reused may be the received CID has been assigned a pCID before.

The client identifier anonymizer AnoC 112 maintains the mapping between CID and pCID in a local database, and then forwards the pseudo client identifier pCID, as well as the received registration identifier REG and the split batch identifier BAT, to the matcher 113.

$$\text{AnoC} \rightarrow \text{Mat} : REG, pCID, \underline{BAT} \qquad (8)$$

Step R4 of the client registration process relates to (pCID, pATT) association. The matcher 113 receives messages from the two anonymizers 111, 112 in steps R2 and R3. With the help of REG, the matcher 113 can associate a pseudo client identifier pCID with a pseudo attribute pATT, and then build a ⟨pCID, pATT⟩ tuple. This tuple will be used for anonymous query matching described below.

Using the XOR-based encryption, the matcher 113 further recreates the original batch identifier BAT from the two split identifiers BAT in messages (7) and (8). If BAT is larger than the (anonymous) client pCID's current batch identifier $BATcur$, the matcher 113 may remove all the currently stored (pCID, pATT) tuples associated with this client 101.

The above mentioned steps R1, R2, R3 and R4 are part of an incomplete strawman design for the client registration protocol. In the following an improved client registration protocol or process is described.

The above mentioned strawman design is disadvantageous in that the attribute anonymizer 111 can associate multiple attributes with a client 101 in Step R1, which violates the above mentioned privacy goals. In the following the strawman design is enhanced to solve this problem.

The basic idea is to send a client's attributes to the attribute anonymizer AnoA 111 anonymously and unlinkably. Here, anonymous means that AnoA 111 cannot identify which client 101 has sent a given attribute, and unlinkable means that AnoA 111 cannot determine whether or not any two attributes came from the same client 101.

Fig. 4 illustrates a possible solution. In the illustrated example transport layer security (TLS) is run between each client 101 and AnoA 111 with the re-purposed matcher acting 113 as a proxy between the client 101 and AnoA 111. In the illustrated example, a client 101 establishes a separate TLS session for each of its attributes; otherwise, AnoA 111 could leverage the TLS session to associate multiple attributes (within that session) with an anonymous client. This set of attributes could allow AnoA 111 to build a quasi-identifier for the client 101, which may be further de-anonymized using auxiliary information. While the TLS-based solution of Fig. 4 works, the per-attribute TLS session establishment is relatively expensive in terms of computation and system overhead for both the client 101 and AnoA 111.

Next, XOR-based encryption will be exploited to substantially reduce the system overheads while still achieving the anonymity and unlinkability properties. As indicated above, at least two proxies are neded for a client 101 to leverage the XOR-based encryption to send attributes to the attribute anonymizer AnoA 111. Indeed, besides AnoA 111, there are two other servers 112, 113 in the Primat system 100: client identifier anonymizer (AnoC) 112, and matcher (Mat) 113. As shown in Figure 5, the client 101 can split its original message sent to AnoA 111 in Step R1, and then send the two split messages to AnoA 111 via AnoC 112 and Mat 113.

$$\text{Cli} \xrightarrow[\text{AnoC}]{\text{Mat}} \text{AnoA} : REG, ATT, \underline{BAT} \qquad (9)$$

Once receiving the two split messages, the attribute anonymizer AnoA 111 can join the split messages to recreate the original message sent from the client. This approach avoids the relative expensive per-attribute TLS session establishment described in Fig. 4.

There is, however, a potential privacy issue. The matcher-as-proxy directly interacts with clients 101, and therefore may know how many attributes each client 101 has registered. As outlined above, from step R4 of the client registration process, the matcher 113 also maintains the ⟨pCID, pATT⟩ tuples, so that the matcher 113 knows how many attributes each anonymous client pCID has registered. As a result, over time the matcher 113 may be able to associate each pCID with a specific client CID, thus deanonymizing pCID to CID. Furthermore, if some CID's share the same pATT, the matcher 113 can link these specific clients together, violating the above mentioned privacy goals.

This issue can be addressed by preventing the matcher 113 from directly interacting with clients 101. Specifically, as shown in Fig. 6, the client 101 may split the split message sent to the matcher-as-proxy again, and then send the double-split messages to the matcher-as-proxy via the other two servers AnoA 111 and AnoC 112.

$$\text{Cli} \xrightarrow[\text{AnoC}]{\text{AnoA}} \text{Mat} : REG, ATT, \underline{\underline{BAT}} \qquad (10)$$

Eventually, relying on the XOR-based double-splitting technique, a client 101 can efficiently register its attributes to the Primat system 100 anonymously and unlinkably.

It is to be noted that, double-splitting typically does not completely eliminate the need for TLS. The client 101 may need to establish TLS sessions with client-facing servers (acting as proxies) so that an eavesdropper cannot decrypt messages. However, the per-proxy TLS sessions can be long-lived, and therefore need to be established to a reduced extend compared to the aforementioned per-attribute TLS sessions.

As such, a client registration protocol has been described in conjunction with Figs. 3 to 6. In the following, the client registration protocol is analyzed to verify whether the client registration protocol can achieve the privacy goals defined above, i.e., anonymity and unlinkability.

| Mat | |
| --- | --- |
| Step | Message Fields |
| | SID1, REG, ATT, <u>BAT</u> |
| R2 | REG, pATT, <u>BAT</u> |
| R3 | REG, pCID, <u>BAT</u> |

| AnoC | |
| --- | --- |
| Step | Message Fields |
| | Cli, SID2, SID1, REG, ATT, <u>BAT</u> |
| | Cli, SID1, REG, ATT, <u>BAT</u> |
| R1 | Cli, REG, CID, <u>BAT</u> |
| R3 | CID, pCID |

| AnoA | |
| --- | --- |
| Step | Message Fields |
| | Cli, SID2, SID1, REG, ATT, <u>BAT</u> |
| | REG, ATT, <u>BAT</u> |
| R2 | ATT, pATT |

**Table 2**

Following the client registration protocol, Table 2 exhausts all the message fields learned by each individual servers 111, 112, 113. Note that, since some servers interact with clients 101, the messages received directly from a client have an implicit "Cli" field, indicating that these messages came from the same client 101. This "Cli" field, for instance, could be a client's network address, and is different from a client's CID. Note also that, for completeness, Table 2 includes the split identifiers SID's, which have been omitted in the design description for clarity. In Table 2, SID1 and SID2 denote the split identifiers of single- and double-split messages, respectively.

Anonymity requires that during the client registration process, no server 111, 112, 113 can associate attributes with a client identifier. This requirement needs that, during the client registration process, no individual server can use its learned information to build the association between ATT and CID. Table 2 shows that ATT and CID are only learned by the attribute anonymizer AnoA 111 and the client identifier anonymizer AnoC 112, respectively. Unless AnoA 111 and AnoC 112 collude, no server can build the association between ATT and CID, thus achieving anonymity.

Unlinkability requires that during the client registration process, no server 111, 112, 113 can link any pair of attributes to the same (anonymous) client. This requirement needs that, during the client registration process, no individual server can use its learned information to build the association between ATT and pCID, or between ATT and Cli. Table 2 shows that the only server that learns ATT is the attribute anonymizer AnoA 111. AnoA, however, cannot link ATT to pCID or Cli, thus achieving unlinkability.

Once, the servers 111, 112, 113 have been populated with the tuples (ATT, pATT) (attribute anonymizer 111), (CID, pCID) (identifier anonymizer 112) and (pCID, pATT) (matcher 113), the Primat system 100 may be used to handle a client query from a client 101 in order to find other clients matching the specified attributes.

Similar to the description of the client registration process, an incomplete strawman design is described at fist, in order to create a basic protocol setup. Subsequently, the strawman design is extended to achieve all the above mentioned privacy goals. As shown in Fig. 7, the basic query matching protocol comprises the following five steps:

Step M1 of the query matching protocol relates to matching result generation. When a client 101, referred to herein as querier, wants to search for other clients matching a set of $n$ attributes $\{ATT_i\}_{i=1}^n$, the client 101 sends a query comprising these attributes to the matcher 113 based on the previously described client registration protocol. In other words, using the above mentioned client registration protocol, the query from a querier 101 having a client identifier $CID_q$ and looking for the set of $n$ attributes $\{ATT_i\}_{i=1}^n$ may be transformed into an anonymized query for the matcher 101, wherein the anonymized query comprises a pseudo client identifier $pCID_q$ (for identifying the querier 101) and pseudo attributes $\{pATT_i\}_{i=1}^n$ (for identifying the set of $n$ attributes $\{ATT_i\}_{i=1}^n$). During the execution of the client registration protocol for transferring the query, the attribute anonymizer 111 may filter out the sensitive attributes contained in a query to achieve improved privacy. As a result of receiving the query, the matcher 113 knows that a querier 101 with a pseudo client identifier $pCID_q$ is searching for clients 101 that match pseudo attributes $\{pATT_i\}_{i=1}^n$.

The matcher 113 may then look for all the pseudo client identifiers pCID's that match the pseudo attributes $\{pATT_i\}_{i=1}^n$ in the (pCID, pATT) tuples which are maintained by the matcher 113. The matcher 113 may support richer matching semantics by leveraging the anonymous information maintained at the attribute anonymizer 111. If there are more than $k$ matched pCID's, the matcher 113 may randomly select $k$ of them as the matching result; otherwise, if there are fewer than k matched pCID's, the matcher may generate one or more empty pCID's as the matching result. The $k$ pCID's may be denoted as $\{pCID_j\}_{j=1}^k$.

StepM2 of the query matching protocol relates to pseudo client identifier transmission. To deanonymize the matched clients $\{pCID_j\}_{j=1}^k$, the matcher 113 sends the matched clients $\{pCID_j\}_{j=1}^k$ (along with the querier's $pCID_q$) to the client identifier anonymizer AnoC 112, which maintains the "CID↔pCID" or the mapping of the ⟨CID, pCID⟩ tuples.

To prevent AnoC 112 from building the association between the querier and each matched client, the matcher may do the following things:

1. Multiple sets of matched clients $\{pCID_j\}_{j=1}^k$ may be matched, i.e., different queriers' matching results may be matched together. This is discussed in further detail below.

2. The querier's $pCID_q$ and each matched client's $pCID_j$ from the set of matched clients $\{pCID_j\}_{j=1}^k$ may be sent separately to the AnoC 112.

Altogether, the matcher 113 may send the following messages separately to AnoC 112:

$$Mat \rightarrow AnoC : pCID_q, r_q, querier$$
$$Mat \rightarrow AnoC : pCID_1, r_1, result$$
$$Mat \rightarrow AnoC : pCID_2, r_2, result \qquad (11)$$
$$\cdots$$
$$Mat \rightarrow AnoC : pCID_k, r_k, result$$

In the above equation (11), $r_q$ is a unique random number which may be used in step M5 to distinguish between different queries from the same querier 101. It may be contained in the original query submitted by the querier 101. More specifically, $r_q$ may be carried by the "REG" field (see expression 6), when the querier 101 sends a query to the matcher 1113 in step M1 based on the client registration protocol. The parameters $\{r_j\}_{j=1}^{k}$ are typically all secure random numbers, generated by the matcher 113, which may be used in step M4 to anonymously build the association between the querier 101 and each matched client. The "querier" and "result" fields may be used to distinguish between the querier 101 and the matched clients 101.

Once receiving the messages in (11), AnoC 112 searches its maintained "CID↔pCID" mapping for the original client identifiers, and recovers the following information:

$$\langle CID_q, r_q, querier \rangle$$
$$\langle CID_1, r_1, result \rangle$$
$$\langle CID_2, r_2, result \rangle \qquad (12)$$
$$\cdots$$
$$\langle CID_k, r_k, result \rangle$$

It should be noted that AnoC 112 does not know the association between the querier 101 and the matching result (i.e., each matched client 101). In the following, it will be described how AnoC 112 can send the matching result in a split form to the appropriate querier 101 anonymously and unlinkably.

Step M3 of the query matching protocol relates to client identifier transmission. To transmit the matching result to the querier 101 in a split form, two servers acting as proxies between AnoC 112 and the querier 101 may be sued. In particular, these two proxies may be the attribute anonymizer AnoA 111 and the matcher Mat 113 (see Fig. 7). On one hand, the two proxies need to know the querier $CID_q$ in order to know where to send the matching result.

On the other hand, the proxies should not know the original identifiers of the matched clients $\{pCID_j\}_{j=1}^{k}$; otherwise, the proxies would be build the association between the querier 101 and the matched clients, thus violating the above mentioned privacy goals. As a result, AnoC 112 transmits the following messages to AnoA 111 and Mat 113 acting as proxies:

$$AnoC \rightarrow AnoA \,/\, Mat : CID_q, r_q$$
$$AnoC \rightarrow AnoA \,/\, Mat : \underline{CID_1}, r_1$$
$$AnoC \rightarrow AnoA \,/\, Mat : \underline{CID_2}, r_2 \qquad (13)$$
$$\cdots$$
$$AnoC \rightarrow AnoA \,/\, Mat : \underline{CID_k}, r_k$$

In messages (13), the querier's $CID_q$ is in clear text, while each matched client's $CID_j$ is in a split form.

Step M4 of the query matching protocol relates to client identifier association. At this point, upon receiving $CID_q$ and $\left\{CID_j\right\}_{j=1}^{k}$ in Step M3, AnoA 111 and Mat 113 as proxies still cannot associate them together. This is because $CID_q$ and $\left\{CID_j\right\}_{j=1}^{k}$ are mixed with many other queriers' identifiers and (split) matching results.

As implied in step M2, each of the querier $CID_q$ and the matched clients $\left\{CID_j\right\}_{j=1}^{k}$ has an assigned secure random number - $r_q$, $r_1$, $r_2$, $\cdots$, $r_k$. One can use the secure random numbers to build the association between the $CID_q$ and each (split) matched client $CID_j$. Specifically, the matcher 113 may send the following $\langle r_q, r_j \rangle$ tuples to the two servers-as-proxies, i.e., AnoA 111 and Mat 113, as shown in Fig. 7:

$$
\begin{aligned}
&\text{Mat} \to \text{AnoA / Mat} : r_q, r_1 \\
&\text{Mat} \to \text{AnoA / Mat} : r_q, r_2 \\
&\qquad\qquad \cdots \\
&\text{Mat} \to \text{AnoA / Mat} : r_q, r_k
\end{aligned}
\qquad (14)
$$

It should be noted that the matcher 113 also logically transmits these $\langle r_q, r_j \rangle$ tuples to the matcher 113 itself acting as a proxy. The transmission is, however, internal to the matcher 113.

Step M5 of the query matching protocol relates to the query result response. After Step M3 and M4, AnoA 111 and Mat 113 (acting as proxies) can build the association between the querier $CID_q$ and the corresponding matched $\left\{CID_j\right\}_{j=1}^{k}$.

Subsequently, AnoA 111 and Mat 113 return the split matching results to the querier 101:

$$
\begin{aligned}
&\text{AnoA / Mat} \to \text{Cli} : CID_1, r_q, r_1 \\
&\text{AnoA / Mat} \to \text{Cli} : CID_2, r_q, r_2 \\
&\qquad\qquad \cdots \\
&\text{AnoA / Mat} \to \text{Cli} : CID_k, r_q, r_k
\end{aligned}
\qquad (15)
$$

In the above messages, $r_q$ is used for the querier 101 to identify a specific query which the split matching results are associated with, e.g., when there are multiple queries issued by the same querier 101 roughly at the same time. The $\left\{r_j\right\}_{j=1}^{k}$ are used by the querier 101 to pair the associated $CID_j$.

Eventually, once the querier 101 receives these split matching results in (15), the querier 101 joins them to recreate the original client identifiers that match the querier's specified attributes.

The method steps M1 to M5 correspond to strawman design of a query matching protocol. There may be a privacy issue in the strawman design. This is because the matcher 113 in step M2 knows the $\langle pCID_q, r_q \rangle$ tuple. In addition, the matcher-as-proxy in Step M3 knows the $\langle CID_q, r_q \rangle$ tuple. Based on these two tuples, the matcher 113 can build the association between $CID_q$ and $pCID_q$, thus deanonymizing the $pCID_q$. In so doing, many CID's can be de-anonymized over time.

Moreover, the matcher 113 maintains the "pCID↔pATT" mapping. Since the matcher 113 can de-anonymize the pCID as described before, the matcher 113 is able to further deduce the "CID↔pATT" mapping. That is, the matcher 113 can learn that a real CID is associated with some set of (anonymous) attributes pATT's, which could in turn be de-anonymized using auxiliary information. Over time, the matcher 113 is able to build the "CID↔ATT" mapping. This violates user privacy.

A possible solution may be to prevent the matcher 113 from building the association between $CID_q$ and $pCID_q$ based on the $r$ values in the first place. To achieve this, the attribute anonymizer AnoA 111 may be re-purposed as the $r$-anonymizer to anonymize various r values, as shown in Fig. 8. In particular, after the step M2 but before step M3, the Primat system 100 may execute the following three steps:

Step C1 of the query matching protocol relates to $\langle r_q, r_j \rangle$ transmission. The matcher 113 transmits the $\langle r_q, r_j \rangle$ tuples to the AnoA 111 acting as r-anonymizer. As described in above, these tuples may be used to build the association between the querier $CID_q$ and each (split) matched client $\underline{CID_j}$.

$$\begin{aligned} \mathrm{Mat} &\to \mathrm{AnoA} : r_q, r_1 \\ \mathrm{Mat} &\to \mathrm{AnoA} : r_q, r_2 \\ &\cdots \\ \mathrm{Mat} &\to \mathrm{AnoA} : r_q, r_k \end{aligned} \qquad (16)$$

Once receiving these $\langle r_q, r_j \rangle$ tuples from the matcher 113, AnoA 111 generates a unique random number as the pseudo $r$ value for each received $r$ value. These pseudo r values may be denoted as $r'_q, r'_1, r'_2, ..., r'_k$.

Step C2 of the query matching protocol relates to r anonymization. To anonymize the $r$ values required by the AnoC 112 in Step M3, the AnoA 111 acting as $r$-anonymizer may transmit the association between the original $r$ values and their corresponding pseudo $r$ values to the AnoC 112 (see Fig. 8).

$$\begin{aligned} \mathrm{AnoA} &\to \mathrm{AnoC} : r_q, r'_q \\ \mathrm{AnoA} &\to \mathrm{AnoC} : r_1, r'_1 \\ \mathrm{AnoA} &\to \mathrm{AnoC} : r_2, r'_2 \\ &\cdots \\ \mathrm{AnoA} &\to \mathrm{AnoC} : r_k, r'_k \end{aligned} \qquad (17)$$

Step C3 of the query matching protocol relates to $\langle r_q, r_j \rangle$ anonymization. To anonymize the $\langle r_q, r_j \rangle$ tuples required in step M4, AnoA 111 may transmit the pseudo $\langle r'_q, r'_j \rangle$ tuples to the two servers-as-proxies, respectively.

$$\begin{aligned} \mathrm{AnoA} &\to \mathrm{AnoA} \,/\, \mathrm{Mat} : r'_q, r'_1 \\ \mathrm{AnoA} &\to \mathrm{AnoA} \,/\, \mathrm{Mat} : r'_q, r'_2 \\ &\cdots \\ \mathrm{AnoA} &\to \mathrm{AnoA} \,/\, \mathrm{Mat} : r'_q, r'_k \end{aligned} \qquad (18)$$

It should be noted that the AnoA 111 also logically transmits these $\langle r'_q, r'_j \rangle$ tuples to the AnoA 111 itself acting as a proxy. The transmission is, however, internal to the AnoA 111.

Subsequently, the Primat system 100 executes the steps from M3 to M5 as outlined above. However, the step M4 is no longer needed because AnoA 111 and Mat 113 already know the client identifier association from step C3. Furthermore, it should be noted that all $r$ values in the steps M3 to M5 are to be replaced by the corresponding pseudo $r$ values ($r'_q, r'_j$). This ensures that the matcher 113 can only know the $\langle pCID_q, r_q \rangle$ and $\langle CID_q, r'_q \rangle$ tuples. As a result, the association between $CID_q$ and $pCID_q$ is broken, and ultimately prevents the matcher 113 from building the "CID↔ATT" mapping.

It should be noted that as the $r$ values are replaced in messages, a client 101 can no longer use $r_q$ to identify a specific query and its associated result when multiple queries from the same client are being processed in the system (see stepM5). In other words, when using pseudo $r$ values, the system 100 does not support a scenario where a client issues multiple queries roughly at the same time. This technical problem may be addressed by the client software which may choose to batch user queries and issue a query only after receiving the result of the previous query.

The query matching protocol is now analyzed to verify whether it can achieve the privacy goals defined above, i.e., anonymity and unlinkability. Following the query matching protocol, Table 3 exhausts all the message fields learned by each individual server.

**Table 3**

| Mat | | AnoC | | AnoA | |
|---|---|---|---|---|---|
| Step | Message Fields | Step | Message Fields | Step | Message Fields |
| M1 | $pCID_q$, $pCID_j$ | M2 | $r_q$, $pCID_q$ (, $CID_q$) | M3 | $r'_{j*}$ $CID_q$ |
| M2 | $r_q$, $pCID_q$ | M2 | $r_j$, $pCID_j$ (, $CID_j$) | M3 | $r'_{q*}$ $\underline{CID_j}$ |
| M2 | $r_j$, $pCID_j$ | C2 | $r_q$, $r'_q$ | C1 | $r_q$, $r_j$ |
| M3 | $CID_q$ | C2 | $r_j$, $r'_j$ | C2 | $r_q$, $r'_q$ |
| M3 | $\underline{CID_j}$ | | | C2 | $r_j$, $r'_j$ |
| C3 | $r'_q$, $\overline{r'_j}$ | | | C3 | $r'_q$, $r'_j$ |

Anonymity requires that during the query matching process, no server can know the matching result. This requirement needs that, during the query matching process, no individual server can use its learned information to build the association between the querier $CID_q$ and each matched client $CID_j$. Table 3 shows that only the client identifier anonymizer AnoC 112 learns both $CID_q$ and $CID_j$, but AnoC 112 cannot associate them, thus achieving anonymity.

Unlinkability requires that during the query matching process, no server can link any pair of matched clients to the same (anonymous) querier. This requirement needs that, during the query matching, no individual server can use its learned information to build the association between $CID_j$ and $pCID_q$. Table 3 shows that only the client identifier anonymizer AnoC 112 learns $CID_j$, but AnoC 112 itself can never link $CID_j$ to $pCID_q$ using its own learned information, thus achieving unlinkability.

Typically, clients' attributes and interests are constantly changing. Therefore, it is important that a querier legitimately repeats queries or issues multiple queries to obtain matched clients that are of the querier's up-to-date interests. However, each query result inevitably leaks some information about the matched clients, for instance the partial attribute information of each matched client. Furthermore, while each server is honest-but-curious, it may operate fake clients to try to violate the privacy of legitimate clients. In particular, servers may be in a position to operate fake clients to send a massive number of queries in an attempt to learn other clients' attributes.

To mitigate this problem, each of the two client-facing servers, AnoA 111 and AnoC 112, may individually limit a client to a pre-determined and/or fixed rate of queries. To bypass the rate-limiting, the two client-facing servers 111, 112 have to collude or use a botnet. The former violates the above mentioned non-collusion trust assumption; the latter amounts to solving the botnet or Sybil attacks. The rate-limiting substantially raises the bar for an adversary.

In the design as so far described, there are opportunities for various servers to analyze the received traffic and link different pieces of information from/to a specific client. To mitigate this traffic analysis attack, a client's messages may be mixed with many other clients' messages of the same type, and servers may randomly delay, reorder and batch messages. These techniques ensure that it is difficult for servers to launch a traffic analysis attack to link client data.

In the present document, a private matching system has been described. The described matching system provides improved scalability compared to other matching system, while operating under a similar honest-but-curious trust model. The described system may make use of XOR-based encryption which has been shown to be effective in substantially reducing the overheads for the private matching system.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A matching system (100) for matching a plurality of clients (101), wherein each client (101) is identified by an identifier (CID) and is associated with one or more attributes (ATT); and wherein each client (101) comprises a user device under a user's control; the matching system (100) comprising:

   - an identity anonymization server (112) configured to store in a first local database maintained by the identity anonymization server (112) identity mappings between identifiers (CID) of clients (101) and corresponding pseudo identifiers (pCID);
   - an attribute anonymization server (111) configured to store in a second local database maintained by the attribute anonymization server (111) attribute mappings between attributes (ATT) and corresponding pseudo attributes (pATT); and
   - a matching server (113) configured to store pseudo mappings between pseudo identifiers (pCID) and associated one or more pseudo attributes (pATT);
   wherein
   - the identity anonymization server (112), the attribute anonymization server (111) and the matching server (113) are separate computing devices;
   - the identity anonymization server (112), the attribute anonymization server (111) and matching server (113) are configured so that at least two of the identity anonymization server (112), the attribute anonymization server (111) and matching server (113) refuse to collude;
   - the identity anonymization server (112) and the attribute anonymization server (111) are configured to receive a registration identifier (REG) along with an identifier (CID) and one or more associated attributes (ATT) of a first client, respectively;
   - the identity anonymization server (112) does not receive the one or more associated attributes (ATT) of the first client (101);
   - the attribute anonymization server (111) does not receive the identifier (CID) of the first client (101);
   - the identity anonymization server (112) is configured, in response to receiving the identifier (CID), to determine a randomly generated pseudo identifier (pCID) for the first client (101), to assign the pseudo identifier (pCID) to the received identifier (CID) and to forward the pseudo identifier (pCID) and the registration identifier (REG) to the matcher (113);
   - the attribute anonymization server (111) is configured, in response to receiving the one or more attributes (ATT), to determine one or more randomly generated pseudo attributes (pATT) for the one or more received attributes (ATT) that the first client (101) is associated with, to assign the pseudo identifier (pCID) to the received identifier (CID) and to forward the pseudo attributes (pATT) and the registration identifier (REG) to the matcher (113); and

- the matching server (113) is configured to generate a pseudo mapping between the pseudo identifier (pCID) and the one or more pseudo attributes (pATT) of the first client (101) using the registration identifier (REG).

2. The matching system (100) of claim 1, wherein the identity anonymization server (112), the attribute anonymization server (111) and the matching server (113) are configured to exchange information such that neither the identity anonymization server (112), nor the attribute anonymization server (111) and nor the matching server (113) are enabled to generate a mapping between the identifier (CID) and the one or more attributes (ATT) of the first client (101).

3. The matching system (100) of any previous claim, wherein

- the attribute anonymization server (111) is configured to store a single attribute mapping for an attribute (ATT); and/or
- the attribute anonymization server (111) is configured to generate a pseudo random pseudo attribute (pATT) for an attribute (ATT); and/or
- the identity anonymization server (112) is configured to store a single identity mapping for an identifier (CID); and/or
- the identity anonymization server (112) is configured to generate a pseudo random pseudo identifier (pCID) for an identifier (CID).

4. The matching system (100) of any previous claim, wherein the registration identifier (REG) comprises a random number.

5. The matching system (100) of any previous claim, wherein

- the matching server (113) is configured to act as a proxy between the first client (101) and the attribute anonymization server (111); and
- the attribute anonymization server (111) is configured to receive each attribute (ATT) associated with the first client (101) via the matching server (113) using a separate cryptographic protocol session.

6. The matching system (100) of any previous claim, wherein

- the matching server (113) and the identity anonymization server (112) are configured to act as separate proxies between the first client (101) and the attribute anonymization server (111);
- the attribute anonymization server (111) is configured to receive the one or more attributes (ATT) associated with the first client (101) using a first split message sent via the matching server (113) and a second split message sent via the identity anonymization server (112); and
- the first and second split messages are generated based on the one or more attributes (ATT) using XOR-based encryption.

7. The matching system (100) of claim 6, wherein

- the attribute anonymization server (111) and the identity anonymization server (112) are configured to act as separate proxies between the first client (101) and the matcher (113);
- the matching server (113) is configured to received the first split message using a third split message sent via the attribute anonymization server (111) and a fourth split message sent via the identity anonymization server (112); and
- the third and fourth split messages are generated based on the first split message using XOR-based encryption.

8. The matching system (100) of any previous claim, wherein

- the identity anonymization server (112), the attribute anonymization server (111) and the matching server (113) are configured to receive a batch identifier (BAT) from the first client (101); and
- the batch identifier (BAT) is indicative of the currentness of the one or more attributes associated with the first client (101).

9. The matching system (100) of any previous claim, wherein

- the identity anonymization server (112) is configured to receive a query identifier ($CID_q$) from a query client (101) and to translate the query identifier ($CID_q$) into a corresponding query pseudo identifier ($pCID_q$);

- the attribute anonymization server (111) is configured to receive one or more query attributes $(\{ATT_i\}_{i=1}^n)$ from the query client (101) and to translate the one or more query attributes $(\{ATT_i\}_{i=1}^n)$ into corresponding one or more pseudo query attributes $(\{pATT_i\}_{i=1}^n)$; and

- the matching server (113) is configured to identify one or more matching pseudo identifiers $(\{pCID_j\}_{j=1}^k)$ based on the one or more pseudo query attributes $(\{pATT_i\}_{i=1}^n)$ and based on the pseudo mappings.

10. The matching system (100) of claim 9, wherein

- the matching server (113) is configured to transmit each of the one or more matching pseudo identifiers $(\{pCID_j\}_{j=1}^k)$ to the identity anonymization server (112) within separate one or more messages;

- each of the one or more messages is associated with a different response parameter $\{r_j\}_{j=1}^k$; and

- the different response parameters are random numbers.

11. The matching system (100) of claim 10, wherein the matching server (113) is configured to

- provide the query pseudo identifier ($pCID_q$) to the identity anonymization server (112) using a query parameter $r_q$; and

- provide one or more mappings between the one or more response parameters $\{r_j\}_{j=1}^k$ and the query parameter to the identity anonymization server (112) using the attribute anonymization server (111) as proxy.

12. The matching system (100) of any of claims 9 to 11, wherein the identity anonymization server (112) is configured to

- determine one or more matching identifiers $(\{CID_j\}_{j=1}^k)$ from the one or more matching pseudo identifiers $(\{pCID_j\}_{j=1}^k)$ using the identity mappings; and

- provide the one or more matching identifiers $(\{CID_j\}_{j=1}^k)$ as query result to the query client (101).

13. The matching system (100) of claim 12, wherein

- the identity anonymization server (112) is configured to transmit the one or more matching identifiers $(\{CID_j\}_{j=1}^k)$ to the query client via the matching server (113) and the attribute anonymization server (111) acting as proxies; and

- the one or more matching identifiers $(\{CID_j\}_{j=1}^k)$ are transmitted as split messages which have been generated using XOR-based encryption.

**Patentansprüche**

1. Abgleichsystem (100) zum Abgleichen einer Vielzahl von Clients (101), wobei jeder Client (101) durch eine Kennung (CID) identifiziert wird und mit einem oder mehreren Attributen (ATT) verknüpft ist und wobei jeder Client (101) eine Benutzervorrichtung unter der Steuerung eines Benutzers umfasst; wobei das Abgleichsystem (100) Folgendes umfasst:

- einen Identitätsanonymisierungsserver (112), der dazu ausgelegt ist, in einer ersten lokalen Datenbank, die vom Identitätsanonymisierungsserver (112) unterhalten wird, Identitätszuordnungen zwischen Kennungen (CID) von Clients (101) und entsprechenden Pseudokennungen (pCID) zu speichern;

- einen Attributanonymisierungsserver (111), der dazu ausgelegt ist, in einer zweiten lokalen Datenbank, die vom Attributanonymisierungsserver (111) unterhalten wird, Attributzuordnungen zwischen Attributen (ATT) und entsprechenden Pseudoattributen (pATT) zu speichern; und

- einen Abgleichserver (113), der dazu ausgelegt ist, Pseudozuordnungen zwischen Pseudokennungen (pCID) und verknüpften ein oder mehreren Pseudoattributen (pATT) zu speichern;

wobei

- der Identitätsanonymisierungsserver (112), der Attributanonymisierungsserver (111) und der Abgleichserver (113) separate Datenverarbeitungsvorrichtungen sind;

- der Identitätsanonymisierungsserver (112), der Attributanonymisierungsserver (111) und der Abgleichserver (113) derart ausgelegt sind, dass mindestens zwei des Identitätsanonymisierungsservers (112), des Attributanonymisierungsservers (111) und des Abgleichservers (113) es ablehnen zu konspirieren;

- der Identitätsanonymisierungsserver (112) und der Attributanonymisierungsserver (111) dazu ausgelegt sind, zusammen mit einer Kennung (CID) bzw. einem oder mehreren verknüpften Attributen (ATT) eines ersten Clients eine Registrierungskennung (REG) zu empfangen;

- der Identitätsanonymisierungsserver (112) das eine oder die mehreren verknüpften Attribute (ATT) des ersten Clients (101) nicht empfängt;

- der Attributanonymisierungsserver (111) die Kennung (CID) des ersten Clients (101) nicht empfängt;

- der Identitätsanonymisierungsserver (112) dazu ausgelegt ist, in Reaktion auf das Empfangen der Kennung (CID) eine zufällig erzeugte Pseudokennung (pCID) für den ersten Client (101) zu bestimmen, die Pseudokennung (pCID) der empfangenen Kennung (CID) zuzuweisen und die Pseudokennung (pCID) und die Registrierungskennung (REG) zum Abgleicher (113) weiterzuleiten;

- der Attributanonymisierungsserver (111) dazu ausgelegt ist, in Reaktion auf das Empfangen des einen oder der mehreren Attribute (ATT) ein oder mehrere zufällig erzeugte Pseudoattribute (pATT) für das eine oder die mehreren empfangenen Attribute (ATT), mit denen der erste Client (101) verknüpft ist, zu bestimmen, die Pseudokennung (pCID) der empfangenen Kennung (CID) zuzuweisen und die Pseudoattribute (pATT) und die Registrierungskennung (REG) zum Abgleicher (113) weiterzuleiten; und

- der Abgleichserver (113) dazu ausgelegt ist, zwischen der Pseudokennung (pCID) und dem einen oder den mehreren Pseudoattributen (pATT) des ersten Clients (101) unter Verwendung der Registrierungskennung (REG) eine Pseudozuordnung zu erzeugen.

2. Abgleichsystem (100) nach Anspruch 1, wobei der Identitätsanonymisierungsserver (112), der Attributanonymisierungsserver (111) und der Abgleichserver (113) dazu ausgelegt sind, Informationen derart auszutauschen, dass weder der Identitätsanonymisierungsserver (112) noch der Attributanonymisierungsserver (111), noch der Abgleichserver (113) in der Lage sind, zwischen der Kennung (CID) und dem einen oder den mehreren Attributen (ATT) des ersten Clients (101) eine Zuordnung zu erzeugen.

3. Abgleichsystem (100) nach einem der vorhergehenden Ansprüche, wobei

- der Attributanonymisierungsserver (111) dazu ausgelegt ist, eine einzelne Attributzuordnung für ein Attribut (ATT) zu speichern; und/oder

- der Attributanonymisierungsserver (111) dazu ausgelegt ist, ein pseudozufälliges Pseudoattribut (pATT) für ein Attribut (ATT) zu erzeugen; und/oder

- der Identitätsanonymisierungsserver (112) dazu ausgelegt ist, eine einzelne Identitätszuordnung für eine Kennung (CID) zu speichern; und/oder

- der Identitätsanonymisierungsserver (112) dazu ausgelegt ist, eine pseudozufällige Pseudokennung (pCID) für eine Kennung (CID) zu erzeugen.

4. Abgleichsystem (100) nach einem der vorhergehenden Ansprüche, wobei die Registrierungskennung (REG) eine Zufallszahl umfasst.

5. Abgleichsystem (100) nach einem der vorhergehenden Ansprüche, wobei

- der Abgleichserver (113) dazu ausgelegt ist, als Proxy zwischen dem ersten Client (101) und dem Attributanonymisierungsserver (111) zu fungieren; und
- der Attributanonymisierungsserver (111) dazu ausgelegt ist, jedes Attribut (ATT), das mit dem ersten Client (101) verknüpft ist, unter Verwendung einer separaten kryptographischen Protokollsitzung via den Abgleichserver (113) zu empfangen.

6. Abgleichsystem (100) nach einem der vorhergehenden Ansprüche, wobei

- der Abgleichserver (113) und der Identitätsanonymisierungsserver (112) dazu ausgelegt sind, als separate Proxies zwischen dem ersten Client (101) und dem Attributanonymisierungsserver (111) zu fungieren;
- der Attributanonymisierungsserver (111) dazu ausgelegt ist, das eine oder die mehreren Attribute (ATT), die mit dem ersten Client (101) verknüpft sind, unter Verwendung einer ersten geteilten Nachricht, die via den Abgleichserver (113) gesendet wird, und einer zweiten geteilten Nachricht, die via den Identitätsanonymisierungsserver (112) gesendet wird, zu empfangen; und
- die erste und die zweite geteilten Nachricht auf Basis des einen oder der mehreren Attribute (ATT) unter Verwendung einer XOR-basierten Verschlüsselung erzeugt werden.

7. Abgleichsystem (100) nach Anspruch 6, wobei

- der Attributanonymisierungsserver (111) und der Identitätsanonymisierungsserver (112) dazu ausgelegt sind, als separate Proxies zwischen dem ersten Client (101) und dem Abgleicher (113) zu fungieren;
- der Abgleichserver (113) dazu ausgelegt ist, die erste geteilte Nachricht unter Verwendung einer dritten geteilten Nachricht, die via den Attributanonymisierungsserver (111) gesendet wird, und einer vierten geteilten Nachricht, die via den Identitätsanonymisierungsserver (112) gesendet wird, zu empfangen; und
- die dritte und die vierte geteilte Nachricht auf Basis der ersten geteilten Nachricht unter Verwendung einer XOR-basierten Verschlüsselung erzeugt werden.

8. Abgleichsystem (100) nach einem der vorhergehenden Ansprüche, wobei

- der Identitätsanonymisierungsserver (112), der Attributanonymisierungsserver (111) und der Abgleichserver (113) dazu ausgelegt sind, eine Stapelkennung (BAT) vom ersten Client (101) zu empfangen; und
- die Stapelkennung (BAT) die Aktualität des einen oder der mehreren Attribute, die mit dem ersten Client (101) verknüpft sind, anzeigt.

9. Abgleichsystem (100) nach einem der vorhergehenden Ansprüche, wobei

- der Identitätsanonymisierungsserver (112) dazu ausgelegt ist, eine Abfragekennung ($CID_q$) von einem Abfrageclient (101) zu empfangen und die Abfragekennung ($CID_q$) in eine entsprechende Abfragepseudokennung ($pCID_q$) zu übersetzen;
- der Attributanonymisierungsserver (111) dazu ausgelegt ist, ein oder mehrere Abfrageattribute ($\{ATT_i\}_{i=1}^n$) vom Abfrageclient (101) zu empfangen und das eine oder die mehreren Abfrageattribute ($\{ATT_i\}_{i=1}^n$) in entsprechende ein oder mehrere Pseudoabfrageattribute ($\{pATT_i\}_{i=1}^n$) zu übersetzen; und
- der Abgleichserver (113) dazu ausgelegt ist, auf Basis des einen oder der mehreren Pseudoabfrageattribute ($\{pCID_j\}_{j=1}^k$) und auf Basis der Pseudozuordnungen eine oder mehrere übereinstimmende Pseudokennungen ($\{pATT_i\}_{i=1}^n$) zu identifizieren.

10. Abgleichsystem (100) nach Anspruch 9, wobei

- der Abgleichserver (113) dazu ausgelegt ist, jede der einen oder der mehreren übereinstimmenden Pseudokennungen ($\{pCID_j\}_{j=1}^k$) in getrennten ein oder mehreren Nachrichten zum Identitätsanonymisierungsserver (112) zu übertragen;

- jede der einen oder der mehreren Nachrichten mit einem anderen Antwortparameter $\{\mathrm{r}_j\}_{j=1}^{k}$ verknüpft ist und
- die verschiedenen Antwortparameter Zufallszahlen sind.

**11.** Abgleichsystem (100) nach Anspruch 10, wobei der Abgleichserver (113) zu Folgendem ausgelegt ist

- Bereitstellen der Abfragepseudokennung (pCID$_q$) unter Verwendung eines Abfrageparameters r$_q$ für den Identitätsanonymisierungsserver (112) und
- Bereitstellen von einer oder mehreren Zuordnungen zwischen dem einen oder den mehreren Antwortpara-metern $\{\mathrm{r}_j\}_{j=1}^{k}$ und dem Abfrageparameter unter Verwendung des Attributanonymisierungsservers (111) als Proxy für den Identitätsanonymisierungsserver (112).

**12.** Abgleichsystem (100) nach einem der Ansprüche 9 bis 11, wobei der Identitätsanonymisierungsserver (112) zu Folgendem ausgelegt ist

- Bestimmen von einer oder mehreren übereinstimmenden Kennungen $(\{CID_j\}_{j=1}^{k})$ aus der einen oder den mehreren übereinstimmenden Pseudokennungen $(\{pCID_j\}_{j=1}^{k})$ unter Verwendung der Identitätszuordnun-gen und

- Bereitstellen der einen oder der mehreren übereinstimmenden Kennungen $(\{CID_j\}_{j=1}^{k})$ als Abfrageergebnis für den Abfrageclient (101).

**13.** Abgleichsystem (100) nach Anspruch 12, wobei

- der Identitätsanonymisierungsserver (112) dazu ausgelegt ist, die eine oder die mehreren übereinstimmenden Kennungen $(\{CID_j\}_{j=1}^{k})$ via den Abgleichserver (113) und den Attributanonymisierungsserver (111), die als Proxies fungieren, zum Abfrageclient zu übertragen; und

- die eine oder die mehreren übereinstimmenden Kennungen $(\{CID_j\}_{j=1}^{k})$ als geteilte Nachrichten, die unter Verwendung einer XOR-basierten Verschlüsselung erzeugt wurden, übertragen werden.


## Revendications

**1.** Système de mise en correspondance (100) permettant de mettre en correspondance une pluralité de clients (101), dans lequel chaque client (101) est identifié par un identifiant (CID) et est associé à un ou plusieurs attributs (ATT) ; et dans lequel chaque client (101) comprend un dispositif utilisateur sous contrôle de l'utilisateur ; le système de mise en correspondance (100) comprenant :

- un serveur d'anonymisation d'identités (112) configuré pour stocker, dans une première base de données locale maintenue par le serveur d'anonymisation d'identités (112), des mappages d'identités entre des identifiants (CID) des clients (101) et des pseudo-identifiants correspondants (pCID) ;
- un serveur d'anonymisation d'attributs (111) configuré pour stocker, dans une seconde base de données locale maintenue par le serveur d'anonymisation d'attributs (111), des mappages d'attributs entre des attributs (ATT) et des pseudo-attributs correspondants (pATT) ; et
- un serveur de mise en correspondance (113) configuré pour stocker des pseudo-mappages entre des pseudo-identifiants (pCID) et un ou plusieurs pseudo-attributs (pATT) associés ;
dans lequel
- le serveur d'anonymisation d'identités (112), le serveur d'anonymisation d'attributs (111) et le serveur de mise en correspondance (113) sont des dispositifs informatiques séparés ;
- le serveur d'anonymisation d'identités (112), le serveur d'anonymisation d'attributs (111) et le serveur de mise en correspondance (113) sont configurés de sorte qu'au moins deux serveurs parmi le serveur d'anonymisation d'identités (112), le serveur d'anonymisation d'attributs (111) et le serveur de mise en correspondance (113) refusent la collision ;

- le serveur d'anonymisation d'identités (112) et le serveur d'anonymisation d'attributs (111) sont configurés pour recevoir un identifiant d'enregistrement (REG) conjointement avec un identifiant (CID) et un ou plusieurs attributs associés (ATT) d'un premier client, respectivement ;

- le serveur d'anonymisation d'identités (112) ne reçoit pas l'un ou les plusieurs attributs (ATT) associés du premier client (101) ;

- le serveur d'anonymisation d'attributs (111) ne reçoit pas l'identifiant (CID) du premier client (101) ;

- le serveur d'anonymisation d'identités (112) est configuré, en réponse à la réception de l'identifiant (CID), pour déterminer un pseudo-identifiant (pCID) généré de manière aléatoire pour le premier client (101), pour attribuer le pseudo-identifiant (pCID) à l'identifiant (CID) reçu et pour transmettre le pseudo-identifiant (pCID) et l'identifiant d'enregistrement (REG) au serveur de mise en correspondance (113) ;

- le serveur d'anonymisation d'attributs (111) est configuré, en réponse à la réception de l'un ou des plusieurs attributs (ATT), pour déterminer un ou plusieurs pseudo-attributs (pATT) générés de manière aléatoire pour l'un ou les plusieurs attributs (ATT) reçus auxquels le premier client (101) est associé, pour attribuer le pseudo-identifiant (pCID) à l'identifiant reçu (CID) et pour transmettre les pseudo-attributs (pATT) et l'identifiant d'enregistrement (REG) au serveur de mise en correspondance (113) ; et

- le serveur de mise en correspondance (113) est configuré pour générer un pseudo-mappage entre le pseudo-identifiant (pCID) et l'un ou les plusieurs pseudo-attributs (pATT) du premier client (101) à l'aide de l'identifiant d'enregistrement (REG).

2. Système de mise en correspondance (100) selon la revendication 1, dans lequel le serveur d'anonymisation d'identités (112), le serveur d'anonymisation d'attributs (111) et le serveur de mise en correspondance (113) sont configurés pour échanger des informations de telle sorte que ni le serveur d'anonymisation d'identités (112), ni le serveur d'anonymisation d'attributs (111), ni le serveur de mise en correspondance (113) ne puissent générer un mappage entre l'identifiant (CID) et le ou les plusieurs attributs (ATT) du premier client (101).

3. Système de mise en correspondance (100) selon l'une quelconque des revendications précédentes, dans lequel

- le serveur d'anonymisation d'attributs (111) est configuré pour stocker un seul mappage d'attribut pour un attribut (ATT) ; et/ou

- le serveur d'anonymisation d'attributs (111) est configuré pour générer un pseudo-attribut (pATT) pseudo-aléatoire pour un attribut (ATT) ; et/ou

- le serveur d'anonymisation d'identités (112) est configuré pour stocker un seul mappage d'identités pour un identifiant (CID) ; et/ou

- le serveur d'anonymisation d'identités (112) est configuré pour générer un pseudo-identifiant (pCID) pseudo-aléatoire pour un identifiant (CID).

4. Système de mise en correspondance (100) selon l'une quelconque des revendications précédentes, dans lequel l'identifiant d'enregistrement (REG) comprend un nombre aléatoire.

5. Système de mise en correspondance (100) selon l'une quelconque des revendications précédentes, dans lequel

- le serveur de mise en correspondance (113) est configuré pour agir comme un serveur mandataire entre le premier client (101) et le serveur d'anonymisation d'attributs (111) ; et

- le serveur d'anonymisation d'attributs (111) est configuré pour recevoir chaque attribut (ATT) associé au premier client (101) par le biais du serveur de mise en correspondance (113) à l'aide d'une session de protocole cryptographique séparée.

6. Système de mise en correspondance (100) selon l'une quelconque des revendications précédentes, dans lequel

- le serveur de mise en correspondance (113) et le serveur d'anonymisation d'identités (112) sont configurés pour agir comme des serveurs mandataires séparés entre le premier client (101) et le serveur d'anonymisation d'attributs (111) ;

- le serveur d'anonymisation d'attributs (111) est configuré pour recevoir le ou les plusieurs attributs (ATT) associés au premier client (101) à l'aide d'un premier message de division envoyé par le serveur de mise en correspondance (113) et d'un deuxième message de division envoyé par le biais du serveur d'anonymisation d'identités (112) ; et

- les premier et deuxième messages de division sont générés sur la base de l'un ou des plusieurs attributs (ATT) à l'aide du chiffrement basé sur XOR.

**7.** Système de mise en correspondance (100) selon la revendication 6, dans lequel

- le serveur d'anonymisation d'attributs (111) et le serveur d'anonymisation d'identités (112) sont configurés pour agir comme des serveurs mandataires séparés entre le premier client (101) et le serveur de mise en correspondance (113) ;
- le serveur de mise en correspondance (113) est configuré pour recevoir le premier message de division à l'aide d'un troisième message de division envoyé par le biais du serveur d'anonymisation d'attributs (111) et d'un quatrième message de division envoyé par le biais du serveur d'anonymisation d'identités (112) ; et
- les troisième et quatrième messages de division sont générés sur la base du premier message de division à l'aide du chiffrement basé sur XOR.

**8.** Système de mise en correspondance (100) selon l'une quelconque des revendications précédentes, dans lequel

- le serveur d'anonymisation d'identités (112), le serveur d'anonymisation d'attributs (111) et le serveur de mise en correspondance (113) sont configurés pour recevoir un identifiant de lot (BAT) à partir du premier client (101) ; et
- l'identifiant de lot (BAT) indique l'actualité de l'un ou des plusieurs attributs associés au premier client (101).

**9.** Système de mise en correspondance (100) selon l'une quelconque des revendications précédentes, dans lequel

- le serveur d'anonymisation d'identités (112) est configuré pour recevoir un identifiant de requête ($CID_q$) à partir d'un client de requête (101) et pour traduire l'identifiant de requête ($CID_q$) en un pseudo-identifiant de requête correspondant ($pCID_q$) ;
- le serveur d'anonymisation d'attributs (111) est configuré pour recevoir un ou plusieurs attributs de requête $(\{ATT_i\}_{i=1}^{n})$ du client de requête (101) et pour traduire le ou les plusieurs attributs de requête $(\{ATT_i\}_{i=1}^{n})$ en un ou plusieurs pseudo-attributs de requête $(\{pATT_i\}_{i=1}^{n})$ correspondants ; et
- le serveur de mise en correspondance (113) est configuré pour identifier un ou plusieurs pseudo-identifiants de mise en correspondance $(\{pCID_j\}_{j=1}^{k})$ sur la base de l'un ou des plusieurs pseudo-attributs de requête $(\{pATT_i\}_{i=1}^{n})$ et sur la base des pseudo-mappages.

**10.** Système de mise en correspondance (100) selon la revendication 9, dans lequel

- le serveur de mise en correspondance (113) est configuré pour transmettre chacun de l'un ou des plusieurs pseudo-identifiants de mise en correspondance $(\{pCID_j\}_{j=1}^{k})$ au serveur d'anonymisation d'identités (112) dans un ou plusieurs messages séparés ;
- chacun de l'un ou des plusieurs messages est associé à un paramètre de réponse différent $\{r_j\}_{j=1}^{k}$ ; et
- les différents paramètres de réponse sont des nombres aléatoires.

**11.** Système de mise en correspondance (100) selon la revendication 10, dans lequel le serveur de mise en correspondance (113) est configuré pour :

- fournir le pseudo-identifiant de requête ($pCID_q$) au serveur d'anonymisation d'identités (112) à l'aide d'un paramètre de requête $r_q$ ; et

- fournir un ou plusieurs mappages entre le ou les plusieurs paramètres de réponse $\{r_j\}_{j=1}^{k}$ et le paramètre de requête au serveur d'anonymisation d'identités (112) à l'aide du serveur d'anonymisation d'attributs (111) comme serveur mandataire.

12. Système de mise en correspondance (100) selon l'une quelconque des revendications 9 à 11, dans lequel le serveur d'anonymisation d'identités (112) est configuré pour :

- déterminer un ou plusieurs identifiants de mise en correspondance $\left(\{CID_j\}_{j=1}^{k}\right)$ à partir de l'un ou des plusieurs pseudo-identifiants de mise en correspondance $\left(\{pCID_j\}_{j=1}^{k}\right)$ à l'aide des mappages d'identités ; et

- fournir l'un ou les plusieurs identifiants de mise en correspondance $\left(\{CID_j\}_{j=1}^{k}\right)$ comme résultat de la requête au client de requête (101).

13. Système de mise en correspondance (100) selon la revendication 12, dans lequel

- le serveur d'anonymisation d'identités (112) est configuré pour transmettre l'un ou les plusieurs identifiants de mise en correspondance $\left(\{CID_j\}_{j=1}^{k}\right)$ au client de requête par le biais du serveur de mise en correspondance (113) et du serveur d'anonymisation d'attributs (111) agissant en tant que serveurs mandataires ; et

- le ou les plusieurs identifiants de mise en correspondance $\left(\{CID_j\}_{j=1}^{k}\right)$ sont transmis en tant que messages de division qui ont été générés à l'aide du chiffrement basé sur XOR.

pCID↔pATT

Mat ⌐113

ATT↔pATT

AnoA ⌐111

CID↔pCID

AnoC

112⌐

100

Client ⌐101 • • • Client ⌐101 • • • Client

101⌐

**Fig. 1**

Proxy1

$SID, R$

$SID, R$

Alice

$SID, X$

$SID, X$

Bob

$R = \mathrm{PRNG}(seed, l)$
$X = M \oplus R$

Proxy2

$M = R \oplus X$

**Fig. 2**

**Fig. 3**

**Fig. 4**

**Fig. 5**

**Fig. 6**

**Fig. 7**

**Fig. 8**

**EP 2 924 620 B1**

**Patent documents cited in the description**

- US 2012311035 A1
- WO 2013097886 A1